## Europäisches Patentamt

## European Patent Office

## Office européen des brevets

(19)

(11) Veröffentlichungsnummer: **0 164 039**
**B1**

(12) # EUROPÄISCHE PATENTSCHRIFT

(45) Veröffentlichungstag der Patentschrift:
23.08.89

(51) Int. Cl.⁴: **G 03 B 31/06**

(21) Anmeldenummer: **85106453.5**

(22) Anmeldetag: **24.05.85**

(54) Verfahren und Vorrichtung zur Steuerung akustischer oder optischer Einrichtungen.

(30) Priorität: **25.05.84 DE 3419636**

(43) Veröffentlichungstag der Anmeldung:
**11.12.85 Patentblatt 85/50**

(45) Bekanntmachung des Hinweises auf die Patenterteilung:
**23.08.89 Patentblatt 89/34**

(84) Benannte Vertragsstaaten:
**AT BE CH DE FR GB IT LI NL**

(56) Entgegenhaltungen:
**WO-A-83/02190**
**US-A-4 260 229**

**ELEKTOR, Band 3, Nr. 4, April 1977, Seiten 42-44, Canterbury, GB; W. FRÖSE: "Simple auto slide changer"**
**Q.S.T. AMATEUR RADIO, Band 56, Nr. 10, Oktober 1972, Seiten 36-39, Newington, US; V. BIANCOMANO: "Limited speech recognition"**

(73) Patentinhaber: **Treutlin, Rolf, Rosenheimer Strasse 46, D-8000 München 80 (DE)**

(72) Erfinder: **Treutlin, Rolf, Rosenheimer Strasse 46, D-8000 München 80 (DE)**

(74) Vertreter: **Patentanwälte Müller- Boré, Deufel, Schön, Hertel, Lewald, Otto, Postfach 26 02 47 Isartorplatz 6, D-8000 München 26 (DE)**

EP 0 164 039 B1

**Beschreibung**

Die Erfindung betrifft ein Verfahren zum Auslösen eines Steuersignals zur Steuerung akustischer oder optischer Einrichtungen, insbesondere eines Diaprojektors oder einer Beleuchtung, durch bestimmte Parameter einer Tonaufzeichnung sowie eine Vorrichtung, mit welcher ein derartiges Verfahren durchgeführt werden kann.

Bei bekannten Steuerverfahren von Diaprojektoren werden Steuersignale unter Verwendung einer Normtonspur, bei Zweispurspulentonbandgeräten auch durch eine zwischen den Normspuren liegende, zusätzliche Spur aufgezeichnet. Nachteilig ist hierbei, daß entweder auf eine stereophone Tonwiedergabe verzichtet oder ein spezielles Tonspeichergerät verwendet werden muß. Tonspeichergeräte, wie Schallplattenspieler oder Videorekorder scheiden hier als Tonquellen aus.

Aus "Elektor" Band 3, Nr. 4, April 1977, Seiten 42 - 44 ist eine Diaprojektorsteuerung bekannt, bei welcher Bildwechsel durchgeführt werden, wenn der aufgezeichnete Kommentar Sprechpausen von mehr als einer Sekunde aufweist. Auch diese Steuerung, die als einfacher Sprachschalter anzusehen ist, kann bei Musikaufnahmen in der Regel keine Anwendung finden.

Der Erfindung liegt die Aufgabe zugrunde, ein Verfahren und eine Vorrichtung zur Steuerung akustischer oder optischer Einrichtungen zu schaffen, bei welchen kein Eingriff an dem Tonträger erforderlich ist und die unabhängig von der Art des Tondokumentes sind.

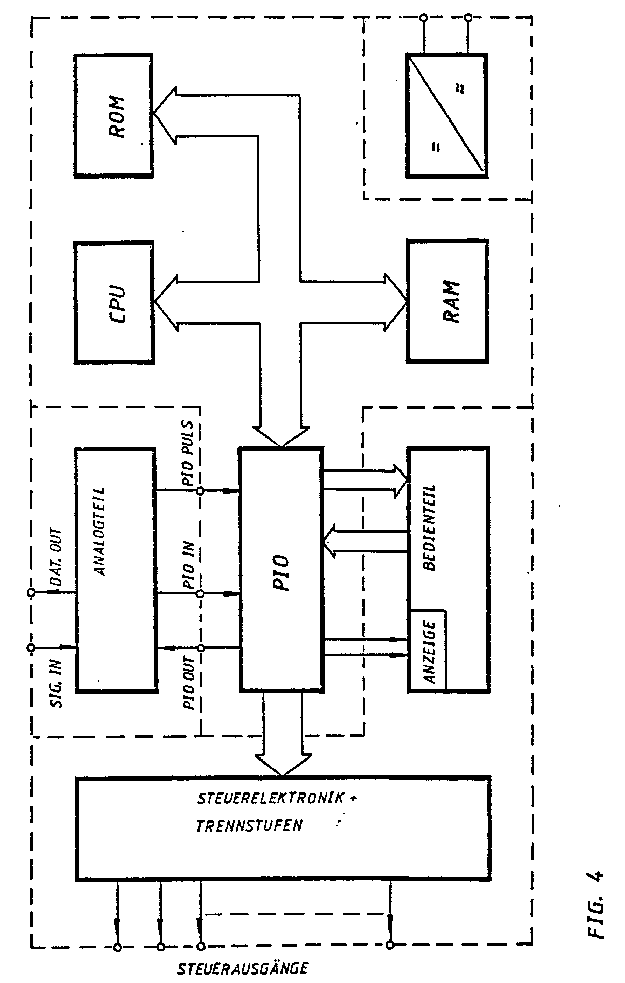

Diese Aufgabe wird erfindungsgemäß dadurch gelöst, daß als Parameter Datensätze verwendet werden, die in einem Erstellungslauf dadurch erzeugt werden, daß bestimmte Stellen der Tonsignalhüllkurve der Tonaufzeichnung erfaßt und zur digitalen Abspeicherung aufbereitet werden, und daß diese Datensätze in einem beispielsweise als Ringspeicher organisiertem Speicher eines Mikroprozessors (Fig. 4) abgespeichert werden, daß im Erstellungslauf bei Setzen einer Steuerinformation für die optische oder akustische Einrichtung der im Ringspeicher enthaltene aktuelle Datensatz mit der Steuerinformation als Steuermarke in einen Hauptspeicher übertragen wird, und daß in einem Anwendungslauf ebenso aufbereitete Datensätze mit den gespeicherten Datensätzen des Erstellungslaufes verglichen werden, und daß bei Übereinstimmung zweier Datensätze das Steuersignal ausgelöst wird.

Mit dem erfindungsgemäßen Verfahren ist eine Reproduzierbarkeit in weitem Bereich möglich, da Veränderungen infolge von maschinenspezieller Parameter oder Stromschwankungen ohne Einfluß bleiben.

Gemäß einer bevorzugten Ausführungsform wird zur Erzeugung der Parameter das obere und das untere Frequenzspektrum des Tonsignals der Tonaufzeichnung beschnitten, aus dem beschnittenen Frequenzband wird durch Gleichrichtung und Tiefpaßfilterung die Hüllkurve erzeugt, das durch einen Allpaß phasenverschobene Hüllkurvensignal und das invertierte, nicht phasenverschobene Hüllkurvensignal wird durch Summation in eine Wechselspannung transformiert, in einem Vergleicher werden die Nulldurchgänge der Wechselspannung erfaßt, mit einem Mikroprozessor werden die Zeiten zwischen den Nulldurchgängen ermittelt, und diese Zeiten werden in dem Ringspeicher abgespeichert.

In weiterer Ausgestaltung der Erfindung werden die Zeiten zwischen zwei Steuermarken als Zeitmarken erfaßt und mit den Steuermarken im Hauptspeicher abgespeichert und aus den Zeitmarken wird ein Zeitfenster gebildet, in dem die gemessenen Zeiten im Ringspeicher mit den im Hauptspeicher gespeicherten Steuermarken mit den Zeitmarken verglichen werden und bei Übereinstimmung die zugehörige Steuerinformation für die optische oder akustische Einrichtung synchron zum Tonsignal ausgelöst wird.

Eine erfindungsgemäße Vorrichtung gemäß Oberbegriff des Anspruchs 5 ist gekennzeichnet durch einen Gleichrichter, einen Tiefpaß, eine Nullpunkt-Schaltung, und einen Vergleicher zur Erstellung der Parameter in Form von Datensätzen, die in einem Erstellungslauf dadurch erzeugt werden, daß bestimmte Stellen der Tonsignalhüllkurve der Tonaufzeichnung erfaßt und zur digitalen Abspeicherung aufbereitet werden, durch einen Speicher eines Mikroprozessors zum Abspeichern der Parameter, und durch einen Hauptspeicher, in welchen im Erstellungslauf bei Setzen einer Steuerinformation für die optische oder akustische Einrichtung der im Speicher enthaltene aktuelle Datensatz mit der Steuerinformation als Steuermarke in den Hauptspeicher übertragen wird.

Weitere bevorzugte Merkmale einer erfindungsgemäßen Vorrichtung sind in den Unteransprüchen angegeben.

Die besonderen Vorteile der erfindungsgemäßen Vorrichtung liegen in dem geringen Bauteilaufwand, in einer großen Störsicherheit und einer Kompatibilität der Tonspeichergeräte.

Ausführungsbeispiele der Erfindung werden anhand der Zeichnung nachstehend erläutert. Es zeigt:

Fig. 1 ein Anwendungsbeispiel;
Fig. 2 ein Analogteil;
Fig. 3 typische Signale; und
Fig. 4 ein Gesamtblockschaltbild.

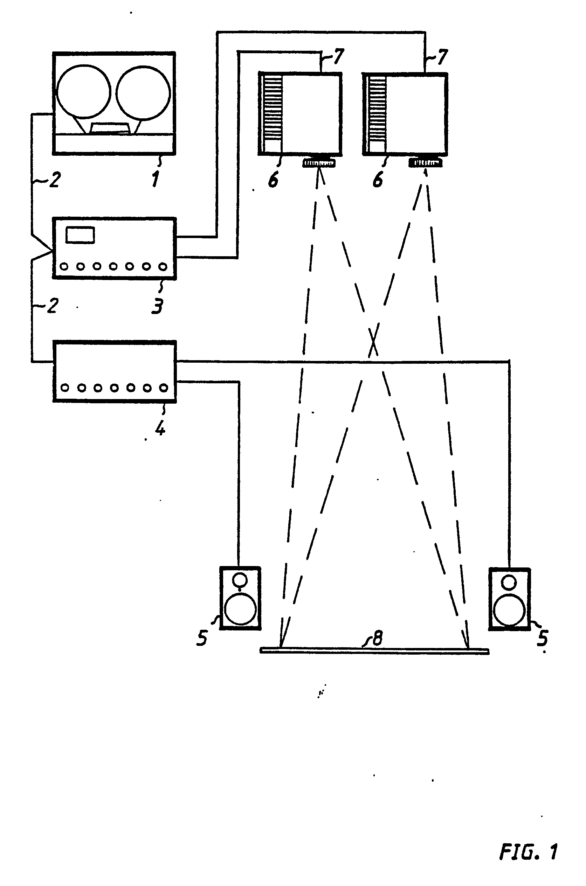

Fig. 1: Anwendungsbeispiel:
Ein Tonbandgerät 1, ein Verstärker 4 und Lautsprecherboxen 5 sind die Komponenten einer elektroakustischen Anlage. In einer Tonleitung 2 ist ein Steuergerät 3 eingeschleift. Diaprojektoren 6 sind durch Fernbedienungskabel 7 mit dem Steuergerät 3 verbunden und projizieren auf eine Leinwand 8. Der Bildwechsel erfolgt tonsynchron durch das Steuergerät.

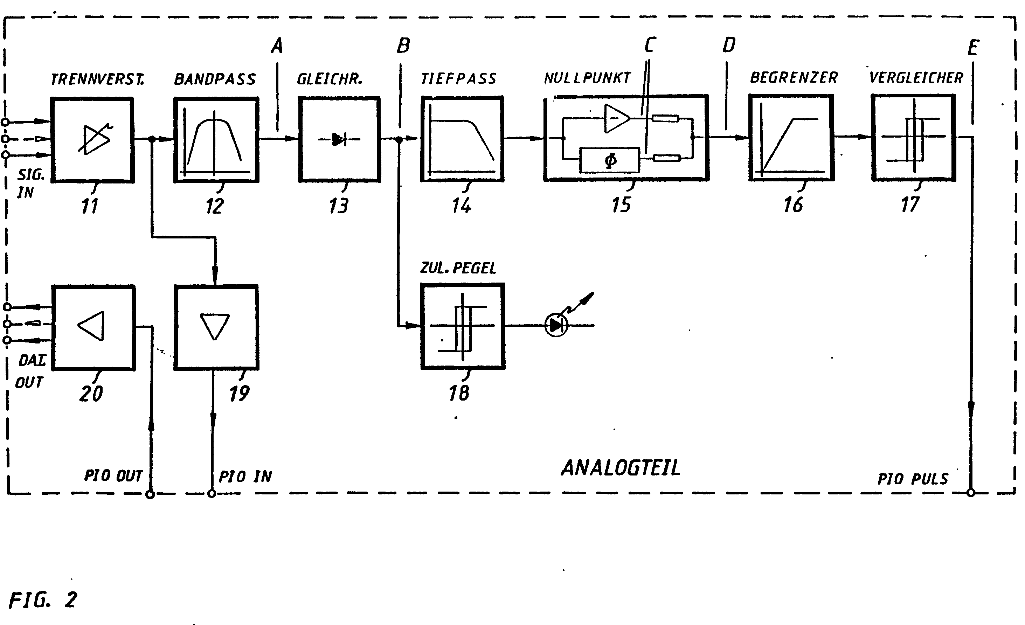

Fig. 2: Analogteil:
Ein Trennverstärker 11 besitzt mehrere Signaleingänge zur rückwirkungsfreien Summierung mehrkanaliger Tonquellen; eine in Stufen schaltbare Verstärkung erlaubt eine Anpassung an unterschiedliche Tonquellenpegel.

Mit einem nachfolgenden Bandpaß 12 wird durch Beschneidung des oberen und unteren Frequenzspektrums Kompatiblität hinsichtlich verschiedener Tonspeichergeräte erzielt. Der Einfluß abweichender Frequenzgänge und Grenzfrequenzen auf das auszuwertende Tonsignal wird vermieden, z. B. bei Austausch des Tonspeichergeräts. Daneben werden Brumm- und höher-frequente Störspannungen unterdrückt.

Ein Gleichrichter 13 ist als Vollweg-Gleichrichter ausgeführt und dient mit einem Tiefpaß 14 zur Mittelwertbildung der Hüllkurve des Tonsignals.

Eine Nullpunkt-Schaltung 15 transformiert das gemittelte Hüllkurvensignal in eine reine Wechselspannung dadurch, daß das durch einen Allpaß phasenverschobene Signal und das invertierte, aber nicht phasenverschobene Signal summiert werden. Am Summationspunkt steht eine "reine" Wechselspannung zur Verfügung.

Diese gegenüber einer einfachen C-Kopplung zwar aufwendigere Schaltung bietet aber hinsichtlich der Reproduzierbarkeit des Wechselspannungssignals eine größere Sicherheit, besonders dann, wenn zwischen Tonspeichergeräten mit unterschiedlicher Dynamik gewechselt wird (Geräte-Kompatibilität), z. B. Billig-und Hochpreistonband.

Das so gewonnene Wechselspannungssignal wird in einem nachfolgenden Begrenzer 16 verstärkt. Da mit einem nachfolgenden Vergleicher 17 nur die Nulldurchgänge der Wechselspannung detektiert werden, wird durch eine zulässige Übersteuerung das dynamische Verhalten der gesamten Schaltung entscheidend verbessert. Auf eine Regelung kann deshalb verzichtet werden. Der Vergleicherzustand wird dem peripheren Schnittstellenbaustein (PIO) des Mikroprozessorsystems zugeführt.

Weil eine Übersteuerung der Signalspannung erst nach der Nullpunkttransformation zulässig ist, ist eine Einrichtung "Zulässiger Pegel" 18 vorgesehen. Die Verstärkung des Trennverstärkers 11 ist so eingestellt, daß es zu keiner nennenswerten Übersteuerung der gleichgerichteten Signalspannung kommt.

Die im Mikroprozessorsystem gespeicherten Marken können als bitserielle Daten über einen Treiber 20 mit Tiefpaßeigenschaft auf ein analoges Tonband- oder Kassettengerät überspielt werden (Speicherung der Steuermarken).

So auf Band gespeicherte Datensätze können über den Trennverstärker 11, den Treiber 19 und PIO in den Speicher des Mikroprozessorsystems geholt werden. Bandgerät zur Datenspeicherung und Tonsteuerung können also identisch sein.

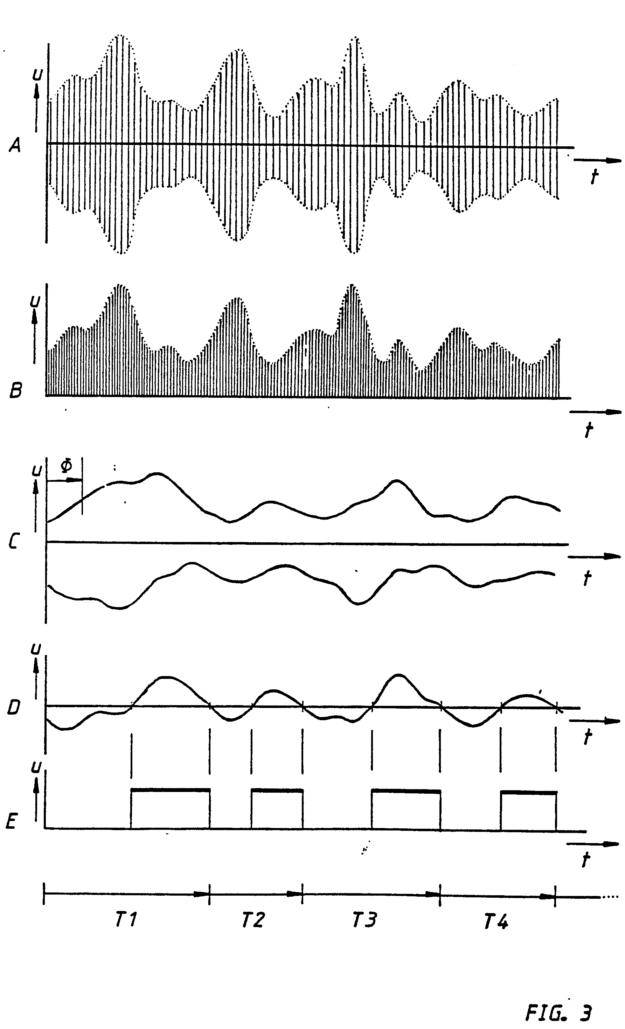

Fig. 3: Typische Signale:
Die Signale A - E finden sich als Signalpunkte auch in Fig. 2.

A: typischer Verlauf eines niederfrequenten Tonsignals bei großer Zeitbasis;

B: dasselbe Signal nach der Vollweggleichrichtung;

C: oben:
tiefpaßgefilterter und um Φ phasenverschobener Hüllkurvenverlauf,

C: unten:
derselbe ohne Phasenverschiebung, jedoch invertiert;

D: nullpunkttransformierte Wechselspannung durch Summation der beiden Spannungen aus C;

E: Ausgangsspannung des Vergleichers.

Die Schaltzeiten T 1 - T 4 werden vom Mikroprozessorsystem ermittelt. Mehrere aufeinanderfolgende Schaltzeiten bilden eine Marke.

Fig. 4: Gesamtblockschaltbild:
Im Blockschaltbild sind funktionswesentliche Bestandteile des Steuergeräts gezeigt.

Es soll das Zusammenwirken der verschiedenen Funktionsgruppen veranschaulichen.

CPU, ROM, RAM und PIO bilden das Mikroprozessorsystem, wobei die Speichergrößen im wesentlichen abhängen von der Größe des Betriebssystems (ROM) und der vorgesehenen Datenspeicherkapazität (RAM). Die CPU steuert über die PIO (periphere Schnittstelle) sämtliche Gerätefunktionen:

Über das Bedienteil erfolgt die Eingabe der Steuerinformationen; eine ausreichend dimensionierte Anzeigeeinheit zeigt den aktuellen Betriebszustand an (Daten laden, Daten speichern, Anzahl der gespeicherten Befehle usw.).

In der an der PIO angeschlossenen Steuerelektronik erfolgt eine Verstärkung und Potentialtrennung der Steuersignale.

Hier erfolgt der Anschluß der zu steuernden Einrichtungen.

## Patentansprüche

1. Verfahren zum Auslösen eines Steuersignals zur Steuerung akustischer oder optischer Einrichtungen, insbesondere eines Diaprojektors oder einer Beleuchtung, durch bestimmte Parameter einer Tonaufzeichnung, dadurch gekennzeichnet, daß als Parameter Datensätze verwendet werden, die in einem Erstellungslauf dadurch erzeugt werden, daß bestimmte Stellen der Tonsignalhüllkurve der Tonaufzeichnung erfaßt und zur digitalen Abspeicherung aufbereitet werden, und daß diese Datensätze in einem beispielsweise als Ringspeicher organisiertem Speicher eines Mikroprozessors (Fig. 4) abgespeichert werden, daß im Erstellungslauf bei Setzen einer Steuerinformation für die optische oder akustische Einrichtung der im Ringspeicher enthaltene aktuelle Datensatz mit der Steuerinformation als Steuermarke in einen Hauptspeicher übertragen wird, und daß in einem Anwendungslauf ebenso aufbereitete Datensätze mit den gespeicherten Datensätzen des Erstellungslaufes verglichen werden, und daß bei Übereinstimmung zweier Datensätze das Steuersignal ausgelöst wird.

2. Verfahren nach Anspruch 1, dadurch gekennzeichnet, daß zur Erzeugung der Parameter das obere und das untere Frequenzspektrum des Tonsignals der Tonaufzeichnung beschnitten wird, daß aus dem beschnittenen Frequenzband durch Gleichrichtung und Tiefpaßfilterung die Hüllkurve erzeugt wird, daß das durch einen Allpaß phasenverschobene Hüllkurvensignal und das invertierte, nicht phasenverschobene Hüllkurvensignal durch Summation in eine Wechselspannung transformiert wird, daß in einem Vergleicher die Nulldurchgänge der Wechselspannung erfaßt werden, daß mit einem Mikroprozessor die Zeiten zwischen den Nulldurchgängen ermittelt werden, und daß diese Zeiten in dem Ringspeicher abgespeichert werden.

3. Verfahren nach Anspruch 2, dadurch gekennzeichnet, daß das Wechselspannungssignal vor dem Vergleicher in einem Begrenzer verstärkt wird.

4. Verfahren nach einem der Ansprüche 1 bis 3, dadurch gekennzeichnet, daß die Zeiten zwischen zwei Steuermarken als Zeitmarken erfaßt und mit den Steuermarken im Hauptspeicher abgespeichert werden, und daß aus den Zeitmarken ein Zeitfenster gebildet wird, in dem die gemessenen Zeiten im Ringspeicher mit den im Hauptspeicher gespeicherten Steuermarken plus Zeitmarken verglichen werden und bei Übereinstimmung die zugehörige Steuerinformation für die optische oder akustische Einrichtung synchron zum Tonsignal ausgelöst wird.

5. Vorrichtung (3) zum Auslösen eines Steuersignals zur Steuerung akustischer oder optischer Einrichtungen, insbesondere eines Diaprojektors (6) oder einer Beleuchtung, durch bestimmte Parameter einer Tonaufzeichnung, gekennzeichnet durch einen Gleichrichter (13), einen Tiefpaß (14), eine Nullpunkt-Schaltung (15), und einen Vergleicher (17) zur Erstellung der Parameter in Form von Datensätzen, die in einem Erstellungslauf dadurch erzeugt werden, daß bestimmte Stellen der Tonsignalhüllkurve der Tonaufzeichnung erfaßt und zur digitalen Abspeicherung aufbereitet werden, durch einen Speicher eines Mikroprozessors zum Abspeichern der Parameter, und durch einen Hauptspeicher, in welchen im Erstellungslauf bei Setzen einer Steuerinformation für die optische oder akustische Einrichtung der im Speicher enthaltene aktuelle Datensatz mit der Steuerinformation als Steuermarke in den Hauptspeicher übertragen wird.

6. Vorrichtung nach Anspruch 5, dadurch gekennzeichnet, daß der Speicher als Ringspeicher ausgebildet ist.

7. Vorrichtung nach Anspruch 5 oder 6, dadurch gekennzeichnet, daß ein Trennverstärker (11) zur elektrischen Entkopplung des Tonspeichergerätes, ein Bandpaß (12) zur Selektion des Grundtonbereichs der Tonaufzeichnung und ein Begrenzerverstärker (16) vorgesehen sind.

8. Vorrichtung nach einem der Ansprüche 5 bis 7, gekennzeichnet durch eine Einrichtung, die die Zeit zwischen zwei Steuermarken als Zeitmarken mißt und diese zusammen mit den Steuermarken im Hauptspeicher speichert.

9. Vorrichtung nach Anspruch 8, gekennziechnet durch eine Einrichtung, die aus den Zeitmarken ein Zeitfenster bildet, in dem die Meßzeiten im Ringspeicher mit den im Hauptspeicher gespeicherten Steuermarken verglichen werden und bei Übereinstimmung die zugehörige Steuerinformation synchron zum Tonsignal ausgelöst wird.

10. Vorrichtung nach Anspruch 9, gekennziechnet durch eine Einrichtung, die bei Nichterkennung einer Steuermarke am Ende des Zeitfensters die codierten Befehle unbedingt ausgibt und erst bei mehrmaliger aufeinanderfolgender Nichterkennung eine Fehlermeldung auslöst.

11. Vorrichtung nach einem der Ansprüche 5 bis 10, gekennzeichnet durch eine Einrichtung, die die Steuermarken mit den Zeitmarken über ein analog arbeitendes Speichergerät resistent als Steuerprogramm speichert bzw. in das Steuergerät holt.

12. Vorrichtung nach einem der Ansprüche 5 bis 11, gekennzeichnet durch eine Einrichtung, mit der Steuermarken aus dem Steuerprogramm gelöscht, in dieses eingefügt, Steuerinformationen verändert oder zeitlich anders gesetzt werden können.

13. Vorrichtung nach einem der Ansprüche 5 bis 12, gekennzeichnet durch eine alphanumerische Anzeige für den laufenden Zustand des Steuergerätes.

**Claims**

1. A process to initiate a control signal to control acoustic or optical equipment, particularly a slide projector or lighting system, by set parameters of a sound recording, characterized in that as parameters sets of data are used which are so produced in a plotting operation that particular points on the sound signal envelope curve of the sound recording are detected and prepared for digital storage, and that these sets of data are stored in a storage unit, typically operating as a ring-type storage unit, of a microprocessor (Fig. 4), that in the plotting operation when setting an item of control information for the optical or acoustic equipment the actual set of data contained in the ring-type storage unit is transferred with the control information as controlling mark into a main storage unit, and that in a functioning operation similarly prepared sets of data are compared with the stored sets of data from the plotting operation, and that when two sets of data agree the control signal is initiated.

2. A process in accordance with claim 1, characterized in that to generate the parameters the upper and lower frequency spectra of the sound signal from the sound recording are cut up, that the envelope curve is generated from the cut-up frequency band by rectification and low-pass filtration, that the envelope curve signal, dephased by an all-pass filter, and the inverted non-dephased envelope curve signal are transformed by summation into an alternating voltage, that the zero passages of the alternating voltage are detected in a comparator, that the times between the zero passages are determined by a microprocessor, and that these times are stored in the ring-type storage unit.

3. A process in accordance with claim 2, characterized in that the alternating voltage signal is amplified in a limiter before the comparator.

4. A process in accordance with one of claims 1 to 3, characterized in that the times between two control marks are detected as time marks and stored with the control marks in the main storage unit, and that from the time marks a time window is formed, in which the measured times in the ring-type storage unit are compared with the control marks plus time marks stored in the main storage unit, and where they agree the respective control data for the optical or acoustic equipment is initiated in synchronism with the sound signal.

5. System (3) to initiate a control signal to control optical or acoustic equipment, particularly a slide projector (6) or lighting system, by means of set parameters of a sound recording, characterized by a rectifier (13), a low-pass filter (14), a zero-point circuit (15) and a comparator (17) to generate the parameters in the form of sets of data, which are so generated in a plotting operation that particular points on the sound signal envelope curve of the sound recording are detected and prepared for digital storage, by a storage unit in a microprocessor to store the parameters, and by a main storage unit, into which during the plotting operation on setting an item of control information for the optical or acoustic equipment the actual set of data contained in the storage unit is transferred with the control information as control mark.

6. System in accordance with claim 5, characterized in that the storage unit is of the ring type.

7. System in accordance with claim 5 or 6, characterized in that a separating amplifier (11) for electrical de-coupling of the sound-storage unit, a band-pass filter (12) for selection of the basic sound area of the sound recording, and a limiter-amplifier (16) are provided.

8. System in accordance with one of claims 5 to 7, characterized by a unit measuring the time between two control marks as time marks, and storing them in the main storage unit with the control marks.

9. System in accordance with claim 8, characterized by a unit forming a time window from the time marks and in which the measured times in the ring-type storage unit are compared with the control marks stored in the main storage unit, and where they agree the respective control information is initiated in synchronism with the sound signal.

10. System in accordance with claim 9, characterized by a unit which, on not recognising a control mark at the end of the time window, emits the coded commands unconditionally, and only emits a fault signal on several successive failures to recognise.

11. System in accordance with one of claims 5 to 10, characterized by a unit which stores the control marks with the time marks resistively as a control programme via an analogue storage unit, and feeds it into the control unit.

12. System in accordance with one of claims 5 to 11, characterized by a unit by which control marks can be deleted from a control programme or inserted into it, and control information altered or temporarily placed in a different position.

13. System in accordance with one of claims 5 to 12, characterized by an alphanumeric indicator for the current state of the control unit.

**Revendications**

1. Procédé de déclenchement d'un signal de commande en vue de la commande d'appareils acoustiques ou optiques, en particulier d'un projecteur de vues diapositives ou d'un éclairage, par des paramètres déterminés d'un enregistrement sonore,

caractérisé en ce qu'en tant que paramètres, on utilise des groupes de données, qui sont engendrés au cours d'une séquence d'établissement par le fait que des points déterminés de la courbe enveloppe du signal acoustique de l'enregistrement sonore sont détectés et préparés en vue de la mémorisation numérique, et en ce que ces groupes de données sont mémorisés dans une mémoire organisée par exemple sous la forme d'une mémoire en anneau d'un microprocesseur (Fig. 4), en ce qu'au cours de la séquence d'établissement lors de la détermination d'une information de commande pour l'appareil optique ou acoustique, le groupe de données actuel contenu dans la mémoire en anneau est transféré avec l'information de commande en tant que repère de commande dans une mémoire principale, et en ce qu'au cours d'une séquence d'utilisation des groupes de données également préparés sont comparés aux groupes de données mémorisés de la séquence d'établissement, et en ce que le signal de commande est déclenché lors de la concordance de deux groupes de données.

2. Procédé selon la revendication 1, caractérisé en ce qu'en vue de la génération des paramètres, le spectre de fréquence supérieur et le spectre de fréquence inférieur du signal acoustique de l'enregistrement sonore sont supprimés, en ce qu'à partir de la bande de fréquence limitée est engendrée la courbe enveloppe par redresse-

5

ment et filtrage passe-bas, en ce que le signal de courbe enveloppe déphasé par un filtre passe-tout et le signal de courbe enveloppe non déphasé inversé sont transformés par sommation en une tension alternative, en ce que les passages par zéro de la tension alternative sont détectés dans un comparateur, en ce que les instants entre les passages par zéro sont détectés à l'aide d'un microprocesseur, et en ce que ces instants sont mémorisés dans la mémoire en anneau.

3. Procédé selon la revendication 2, caractérisé en ce qu le signal de tension alternative est amplifié en amont du comparateur dans un limiteur.

4. Procédé selon l'une quelconque des revendications 1 à 3, caractérisé en ce que les instants entre deux repères de commande sont détectés en tant que repères temporels et sont mémorisés avec les repères de commande dans la mémoire principale, et en ce qu'à partir des repères temporels est formée une fenêtre temporelle, dans laquelle les temps mesurés sont comparés dans la mémoire en anneau aux repères de commande et aux repères temporels mémorisés dans la mémoire principale et, lors de la concordance, l'information de commande associée à l'appareil optique ou acoustique est déclenchée de façon synchrone au signal sonore.

5. Dispositif (3) de déclenchement d'un signal de commande en vue de la commande d'appareils acoustiques ou optiques, en particulier d'un projecteur de vues diapositives (6) ou d'un éclairage, par des paramètres déterminés d'un enregistrement sonore, caractérisé par un redresseur (13), un filtre passe-bas (14), un circuit de point zéro (15), et un comparateur (17) en vue de l'établissement des paramètres sous la forme de groupes de données, qui sont engendrés dans une séquence d'établissement par le fait que des points déterminés de la courbe enveloppe du signal acoustique de l'enregistrement sonore sont détectés et sont préparés en vue d'une mémorisation numérique, par une mémoire du microprocesseur en vue de la mémorisation des paramètres, et par une mémoire principale dans laquelle, au cours de la séquence d'établissement, lors de la détermination d'une information de commande pour l'appareil optique ou acoustique, le groupe de données actuel contenu dans la mémoire est transmis avec l'information de commande en tant que repère de commande dans la mémoire principale.

6. Dispositif selon la revendication 5, caractérisé en ce que la mémoire est réalisée sous la forme d'une mémoire en anneau.

7. Dispositif selon la revendication 5 ou 6, caractérisé en ce qu'un amplificateur de séparation (11) en vue du découplage électrique de l'appareil d'enregistrement sonore, un filtre passe-bande (11) en vue de la sélection de la plage de son fondamental de l'enregistrement sonore et un amplificateur limiteur (16) sont prévus.

8. Dispositif selon l'une quelconque des revendications 5 à 7, caractérisé par un appareil qui mesure le temps entre deux repères de commande en tant que repères temporels et mémorise ceux-ci conjointement avec les repères de commande dans la mémoire principale.

9. Dispositif selon la revendication 8, caractérisé par un appareil qui forme, à partir des repères temporels, une fenêtre temporelle dans laquelle les temps de mesure dans la mémoire en anneau sont comparés aux repères de commande mémorisés dans la mémoire principale et, lors de la concordance, l'information de commande associée est déclenchée de façon synchrone au signal acoustique.

10. Dispositif selon la revendication 9, caractérisé par un appareil qui délivre inconditionnellement, dans le cas de la non reconnaissance d'un repère de commande à la fin de la fenêtre temporelle, les ordres codés et ne déclenche une signalisation d'erreur que dans le cas de plusieurs non reconnaissances successives.

11. Dispositif selon l'une quelconque des revendications 5 à 10, caractérisé par un appareil qui mémorise ou conserve dans l'appareil de commande les repères de commande avec les repères temporels, par l'intermédiaire d'une mémoire fonctionnant de manière analogique durable en tant que programme de commande.

12. Dispositif selon l'une quelconque des revendications 5 à 11, caractérisé par un appareil avec lequel des repères de commande peuvent être effacés du programme de commande, introduits dans celui-ci, des informations de commande peuvent être modifiées ou disposées temporellement autrement.

13. Dispositif selon l'une quelconque des revendications 5 à 12, caractérisé par un affichage alphanumérique pour l'état de fonctionnement de l'appareil de commande.

FIG. 1

TRENNVERST.    BANDPASS    *A*    GLEICHR.    *B*    TIEFPASS    NULLPUNKT    *C*    *D*    BEGRENZER    VERGLEICHER    *E*

SIG. IN

11    12    13    14    15    16    17

ZUL. PEGEL

DAI OUT

20    19    18

3

PIO OUT    PIO IN     ANALOGTEIL     PIO PULS

EP 0 164 039 B1

FIG. 2

FIG. 3

FIG. 4

ROM

CPU

RAM

=  ~

ANALOGTEIL

DAT. OUT

SIG. IN

PIO PULS

PIO IN

PIO OUT

PIO

BEDIENTEIL

ANZEIGE

STEUERELEKTRONIK +
TRENNSTUFEN

STEUERAUSGÄNGE

7